# EUROPÄISCHE PATENTSCHRIFT

(11) **EP 2 547 977 B1**
(45) Veröffentlichungstag und Bekanntmachung des Hinweises auf die Patenterteilung: **30.11.2016**
(21) Anmeldenummer: 11708833.6
(22) Anmeldetag: 15.03.2011
(51) Int. Cl.: F28D 7/16

(54) **WÄRMETAUSCHER MIT HALTEELEMENT**
HEAT EXCHANGER WITH RETAINING ELEMENT
ECHANGEUR DE CHALEUT AVEC ELÉMENT DE RETENUE

(30) Priorität: 16.03.2010 DE 102010011644
(43) Veröffentlichungstag der Anmeldung: 23.01.2013
(73) Patentinhaber: Babcock Borsig Service GmbH, 46049 Oberhausen (DE)
(72) Erfinder: TREPTOW, Hans-Dieter, 44866 Bochum (DE); FRIEBEL, Holger, 45663 Recklinghausen (DE); ARLT, Michael, 46149 Oberhausen (DE)
(74) Vertreter: Cohausz & Florack
(86) Internationale Anmeldenummer: PCT/EP2011/053839
(87) Internationale Veröffentlichungsnummer: WO 2011/113808

(56) Entgegenhaltungen:
- EP-A1- 0 364 920
- WO-A1-02/053962
- DE-A1-102008 021 021
- US-A- 1 852 363
- MÜPRO GMBH: "Müpro Doppelschelle", IKZ HAUSTECHNIK SANITAR, HEIZUNG KLIMA ELEKTRO, STOBEL VERLAG. ARNSBERG, DE, Bd. 34, Nr. 3, 1. Januar 1979 (1979-01-01) , XP002086692,

## Beschreibung

Die Erfindung betrifft einen Wärmeaustauscher nach dem Oberbegriff des Anspruchs 1. So ein Wärmetauscher ist aus EP 0 264 920 bekannt.

Rohrbündel aufweisende Wärmeaustauscher sind in unterschiedlichen Ausführungen bekannt und werden für unterschiedliche Anwendungen eingesetzt. Die Wärmeaustauscher können beispielsweise dem Abkühlen oder Aufheizen von Rauchgasen eines Kraftwerks dienen. In diesem Fall erfolgt der Wärmeaustausch zwischen einer Flüssigkeit in den Rohren und einem Gas zwischen den Rohren. Es sind aber auch Wärmeaustauscher mit Rohrbündeln zum Wärmeaustausch zwischen zwei Gasen oder zwei Flüssigkeiten bekannt. Insbesondere Rohrbündel zum Aufheizen oder Abkühlen von Rauchgasen werden senkrecht zu den Rohren angeströmt.

Die Rohre können etwa in Abhängigkeit von den korrosiven Eigenschaften der beteiligten Medien aus Metallen oder Kunststoffen gefertigt und bedarfsweise zusätzlich beschichtet sein. Kunststoffrohre sind häufig flexibel ausgebildet. Die Rohrbündel können zudem aus geraden Rohren oder aus U-Rohren zusammengesetzt sein, wobei die Rohre über weite Strecken des Rohrbündels im Wesentlichen parallel zueinander verlaufen.

Damit die Abstände der Rohre untereinander, also die sogenannte Teilung des Rohrbündels, dauerhaft sichergestellt und übermäßige Schwingungen der Rohre verhindert werden können, sind sogenannte Spacerebenen im Rohrbündel vorgesehen. In diesen Ebenen, die typischerweise senkrecht zu den Rohren verlaufen, wird jedes Rohr des Rohrbündels durch entsprechende Halteelemente in einer vorgegebenen Position gehalten.

Aus der DE 42 17 923 A1 sind ein Halteelement und eine Spacerebene bekannt, die einen um das Rohrbündel umlaufenden Rahmen aufweisen. In diesem Rahmen ist eine Reihe von Stäben parallel zueinander abgespannt. Auf jedem Stab sind mehrere Hülsen aufgefädelt, die untereinander und mit benachbarten Hülsen zu einem Halteelement verbunden sind. Zwischen den Hülsen ist jeweils ein Rohr des Rohrbündels geklemmt und somit positioniert. Durch die Gleichartigkeit der Hülsen und Stäbe ergibt sich ein modular aufgebautes Halteelement der Spacerebene. Nachteilig an dem bekannten Halteelement und der bekannten Spacerebene ist jedoch deren aufwändige Fertigung. Außerdem setzt sich die freie Querschnittsfläche der Spacerebene aus einer Vielzahl kleiner, nicht zusammenhängender Freiflächen zusammen.

Der Erfindung liegt daher die Aufgabe zugrunde, die Spacerebene und das Halteelement jeweils der bekannten und eingangs näher beschriebenen Art derart auszugestalten und weiterzubilden, dass große zusammenhängende Freiflächen der Spacerebene bei vereinfachter Montage der Spacerebene bereitgestellt werden können.

Diese Aufgabe ist bei einem Wärmetauscher gemäß dem Oberbegriff des Anspruchs 1 dadurch gelöst.

Die erfindungsgemäßen Halteelemente des Warmetauschers erlauben einen modularen Aufbau einer Spacerebene durch gleichartige Halteelemente. Dazu wird in einer Spacerebene jeweils zwei Rohrreihen eine stabförmige Stütze zugeordnet, auf der eine Mehrzahl von Halteelementen aufgefädelt wird. Die Anzahl der Halteelemente entspricht dabei vorzugsweise der Anzahl an Rohren einer Rohrreihe. Durch die beiden Führungselemente eines jeden Halteelements wird jeweils ein Rohr geführt und dadurch in der Spacerebene positioniert. Die beiden von einem Halteelement gehaltenen Rohre sind dabei Teil benachbarter Rohrreihen, die auf einander gegenüberliegenden Seiten der stabförmigen Stütze angeordnet sind. Der Einfachheit halber verlaufen die Stützen und die Rohrreihen einer Spacerebene vorzugsweise im Wesentlichen parallel zueinander.

Der Abstand zweier über eine Stütze gehaltener Rohrreihen wird durch die zwischen den Führungselementen angeordneten Distanzierungselemente festgelegt. Dagegen ist der Abstand zweier, benachbarten Stützen zugeordneter Rohrreihenpaare unabhängig vom verwendeten Halteelement wählbar. So können auf einfache Weise unterschiedliche Spaltbreiten zwischen benachbarten Rohrreihen eines Rohrbündels bereitgestellt werden.

Zudem ergibt sich in Abhängigkeit von den Abständen der entlang der Stütze angeordneten Halteelemente der Abstand der Rohre einer Rohrreihe zueinander. Zur Fixierung der Halteelemente entlang der Stütze können die Haltelemente formschlüssig, reibschlüssig und/oder kraftschlüssig auf die entsprechende Stütze aufgefädelt sein. Trotz der Verwendung gleichartiger Halteelemente ist auf diese Weise eine hohe Flexibilität bei der Ausgestaltung einer Spacerebene gewährleistet. Mit anderen Worten lassen sich durch gleichartig, vorkonfektionierte Halteelemente dennoch unterschiedliche Spacerebenen aufbauen.

Da die Halteelemente konstruktiv einfach ausgebildet werden und dabei geringe Abmessungen aufweisen können, sind die Halteelemente sehr einfach, schnell und kostengünstig zu fertigen. Darüber hinaus erlauben die Halteelemente aber auch eine sehr einfache, schnelle und kostengünstige Montage einer Spacerebene in der zuvor beschriebenen Weise.

Die Halteelemente können problemlos mit verschiedenen standardisierten Abmessungen vorkonfektioniert werden. Zum Aufbau einer bestimmten Spacerebene können dann Halteelemente mit einer Standardgröße ausgewählt werden. Da durch die Wahl der Halteelemente nur einzelne Dimensionen der Spacerebene festgelegt werden, können viele verschiedene Spacerebenen mit einer geringen Anzahl unterschiedlicher, standardisierter Halteelemente aufgebaut werden.

Die unter Verwendung der beschriebenen Halteelemente aufgebauten Spacerebenen weisen zudem große zusammenhängende Freiflächen auf. Große zusammenhängende Freiflächen verringern die Gefahr, dass sich Partikel auf den Spacerebenen ablagern und nach und nach einzelne Abschnitte des Rohrbündels blockieren bzw. zusetzen. Insbesondere der Umstand, dass nur in jedem übernächsten Spalt zwischen den Rohrreihen eines Rohrbündels eine Stütze vorgesehen werden muss und benachbarte Paare von Rohrbündeln untereinander nicht durch zusätzliche Halteelemente verbunden werden müssen, wirkt sich positiv auf die Größe der zusammenhängenden Freiflächen aus.

Durch den beschriebenen Aufbau der Spacerebenen unter Verwendung der ebenfalls beschriebenen Halteelemente ist zudem eine gute Abreinigung von partikelförmigen Ablagerungen möglich, und zwar sowohl von der Spacerebene als auch von den Rohren zwischen zwei Spacerebenen.

Des Weiteren kann die Spacerebene ortsfest oder entlang des Rohrbündels verschieblich angeordnet sein. Eine ortsfeste Anordnung der Spacerebene bietet sich an, wenn die Rohre verschieblich in den Führungselementen geführt sind. Eine verschiebliche Anordnung kann dagegen vorteilhaft sein, wenn die zu erwartende thermischen Ausdehnung der Rohre erheblich ist, die Rohre aber fest in den Führungselementen gehalten sind. Dann wird die Spacerebene durch das Rohrbündel selbst gehalten und je nach Längenausdehnungen der Rohre längs zum Rohrbündel verschoben, um eine Beschädigung der Rohre infolge Längenausdehnung zu vermeiden.

Bei den Halteelementen ist die Öffnung zur Durchführung einer stabförmigen Stütze im Distanzierungselement vorgesehen. Dies ermöglicht einen konstruktiv einfachen Aufbau der Halteelemente. Unabhängig davon ist es zweckmäßig, wenn die Öffnung zur Durchführung der stabförmigen Stütze etwa mittig zwischen den beiden Führungselementen des Halteelements vorgesehen ist, um etwaige Kippmomente zu vermeiden.

Die Führungselemente sind hülsenförmig ausgebildet. Die Führungselemente sind dann vorzugsweise deutlich länger ausgebildet als der Durchmesser der Führungselemente. Auf diese Weise werden die Rohre in den Führungselementen über eine größere Länge gehalten und geführt, so dass die Gefahr einer Beschädigung der Rohre und/oder der Halteelemente durch Scheuerstellen zwischen den Rohren und den Führungselementen verringert wird. Um die Anlageflächen zwischen Rohren und Führungselementen gering zu halten, können diese grundsätzlich eckige Querschnitte aufweisen, wobei die Anzahl der Ecken insbesondere vom Fertigungsaufwand mitbestimmt wird.

Um die Anlageflächen zwischen den Rohren und den Führungselementen möglichst großflächig auszubilden, so dass eine ungleichmäßige Abnutzung der Rohre vermieden wird, sind die Führungselemente rohrförmig ausgebildet. In diesem Zusammenhang bieten sich insbesondere kreisförmige Querschnitte der Führungselemente an, die vorzugsweise im Wesentlichen dem Außendurchmesser der geführten Rohre entsprechen. Der Querschnittsdurchmesser der Führungselemente ist größer als der Außendurchmesser der Rohre, wenn diese in den Führungselementen nur geführt aber nicht festgehalten werden sollen.

Die Fertigung der Halteelemente und/oder der Spacerebenen kann vereinfacht werden, wenn die Halteelemente einstückig ausgebildet werden.

Um die Fertigungskosten der Halteelemente gering zu halten und die Korrosionsbeständigkeit der Halteelemente zu verbessern, ist das Halteelement aus Kunststoff gebildet. Dabei ist es nicht nur hinsichtlich der Materialkosten vorteilhaft, dass die Halteelemente spritzgegossen oder extrudiert werden.

Um sicherzustellen, dass die Rohre einer Rohrreihe gleichmäßig und in einem vorbestimmten Abstand zueinander angeordnet sind, kann das Halteelement mit einem Abstandshalter versehen sein. Der Abstandshalter kann so ausgebildet sein, dass zwei nachfolgende, auf der Stütze aufgefädelte, Halteelemente aneinander anliegen, wenn die entsprechenden Rohre den vorbestimmten Abstand zueinander einnehmen. Aus konstruktiver Sicht kann es dabei bevorzugt sein, wenn der Abstandshalter am Distanzierungselement angebracht ist. Es kann auch auf jeder Seite des Distanzierungselements ein Abstandshalter vorgesehen sein.

Damit aufeinanderfolgende Halteelemente weder zu nah noch zu weit voneinander beabstandet sind, bietet es sich an, wenn der Abstandshalter einen Befestigungsabschnitt aufweist. Der Befestigungsabschnitt dient dann vorzugsweise zur Befestigung gleichartiger Halteelemente untereinander längs zur stabförmigen Stütze.

Ein Halteelement kann der Montage eines weiteren Bauteils des Rohrbündels dienen, wenn an einem Ende des Halteelements eine Aussparung in Form einer Aufnahme vorgesehen ist. In eine solche Aussparung kann dann bedarfsweise eine Schalldämmplatte eingesteckt werden. Die Aussparung kann beispielsweise im Distanzierungselement etwa in Form einer Nut gebildet sein. Diese Aussparung kann alternativ auch durch das Distanzierungselement einerseits und die Führungselemente andererseits gebildet werden.. Im Falle einer nutförmigen Aussparung kann dann das Distanzierungselement den Nutgrund bilden, während die Führungselemente die Nutflanken der Aufnahme bilden.

Bei einer ersten Ausgestaltung der Spacerebene werden jeweils zwei benachbarte Rohrreihen des Rohrbündels von einer Stütze gehalten. Dann ist vorzugsweise in jedem übernächsten Zwischenraum zwischen den Rohrreihen des Rohrbündels eine Stütze vorgesehen. Dabei erstreckt sich die Stütze in Richtung der Rohrreihen. Auf diese Weise wird die Anzahl benötigter Stützen verringert und die zusammenhängende Freifläche vergrößert.

Um Feststoffablagerungen abreinigen zu können, werden sogenannte Sprühschläuche in das Rohrbündel eingebracht, aus denen eine Spülflüssigkeit in den Zwischenraum zwischen den Rohren des Rohrbündels abgegeben werden kann. Dies ist konstruktiv besonders einfach möglich, wenn wenigstens einzelne Distanzierungselemente der Halteelemente einer Spacerebene jeweils eine Öffnung zur Durchführung eines Sprühschlauchs aufweisen. Entsprechende Halteelemente halten dann sowohl einander benachbarte Rohre als auch einen Sprühschlauch.

Um zu verhindern, dass benachbarte Rohre einer Rohrreihe einen zu geringen Abstand zueinander einnehmen, kann vorgesehen sein, dass jeweils zwei benachbarte Halteelemente über einen Abstandshalter voneinander beabstandet sind. Dieser Abstandshalter kann ein separates Bauteil sein, welches bedarfsweise zwischen zwei Halteelementen auf die stabförmige Stütze aufgefädelt ist. Zur Vereinfachung der Montage einer Spacerebene und zur Verringerung der hierfür benötigten Bauteile kann es sich jedoch anbieten, wenn jedes Halteelement wenigstens einen Abstandshalter aufweist. Das Halteelement ist dann vorzugsweise einteilig mit dem Abstandshalter ausgebildet. Je nach Art der Herstellung der Halteelemente kann es jedoch zweckmäßig sein, wenn die Halteelemente einstückig mit dem Abstandshalter ausgestattet sind.

Der Abstandshalter kann insbesondere dann zur Stabilisierung der gesamten Spacerebene beitragen, wenn der Abstandshalter hülsenförmig ausgebildet und um die Öffnung zur Durchführung der Stütze herum angeordnet ist. In diesem Fall wird die Stütze durch den Abstandshalter hindurch geführt, so dass sich dieser bedarfsweise auf der Stütze abstützen kann. Besonders bevorzugt ist es in diesem Zusammenhang, wenn der Abstandshalter konzentrisch zur Öffnung zur Durchführung der Stütze ausgebildet ist. Dies dient nicht nur einer einfacheren und kostengünstigeren Herstellung der Halteelemente, sondern auch einer besseren Abstützung der Abstandshalter auf der Stütze.

Alternativ oder zusätzlich können die Stabilität der Spacerebene ebenso wie die Montage dadurch verbessert werden, dass eine Mehrzahl von Halteelementen miteinander in Längsrichtung der Stütze zu einer Halteeinrichtung verbunden sind. Dies kann sich ebenfalls positiv auf die genaue Positionierung der Rohre eines über eine Stütze gehaltenen Rohrreihenpaares untereinander auswirken. In diesem Fall bilden mehrere Halteelemente eine Halteeinrichtung zur Positionierung einer Vielzahl von Rohren, die sich in Stützenrichtung erstreckt und von dieser gehalten wird.

Die Verbindung der Halteelemente miteinander erfolgt dabei vorzugsweise formschlüssig, kraftschlüssig und/oder reibschlüssig. Auf diese Weise kann eine Spacerebene trotz Verbindung der Halteelemente untereinander schnell und kostengünstig gefertigt werden.

Bei untereinander verbundenen Halteelementen bietet es sich an, wenn ein Abstandshalter eines Halteelements mit einem Distanzierungselement des benachbarten Halteelements verbunden ist. Alternativ kann auch ein Abstandshalter mit einem Abstandshalter des benachbarten Halteelements verbunden sein. Dazu bietet es sich an, wenn jedes Halteelement auf beiden Seiten des Distanzierungselements einen Abstandshalter aufweist. In beiden Fällen wird durch die Verbindung der Halteelemente untereinander gleichzeitig eine vorbestimmte Beabstandung der Rohre einer Rohrreihe untereinander sichergestellt.

In der Spacerebene können bedarfsweise ausschließlich Halteelemente mit einer Aussparung in Form einer Aufnahme vorgesehen sein, selbst wenn lediglich die Aussparungen bestimmter Halteelemente als Aufnahme etwa für eine Schalldämmplatte genutzt werden. Es kann aber ausreichen, wenn nur die von bestimmten stabförmigen Stützen getragenen Halteelemente mit einer entsprechenden Aussparung versehen sind. Schalldämmplatten werden nämlich vorzugsweise nur zwischen bestimmten Rohrreihen des Rohrbündels vorgesehen. Auch müssen sich Schalldämmplatten nicht über die ganze Länge der Rohrreihen erstrecken, so dass bei endständigen, nicht mit einer Schalldämmplatte zusammenwirkenden Halteelementen auf eine Aussparung verzichtet werden kann. Vorzugsweise sind die eine Aussparung aufweisende Halteelemente, bedarfsweise gruppenweise, parallel zu angrenzenden Rohrreihen hintereinander angeordnet.

Um den benötigten Raum für die Aussparung bereitzustellen, kann die Öffnung zur Durchführung einer Stütze außermittig angeordnet sein. Vorzugsweise ist dann die Öffnung zur Durchführung einer Stütze zu dem von der Aussparung abgewandten Ende des Distanzierungselements verschoben.

Bei einer weiteren, bevorzugten Ausgestaltung weisen Halteelemente einer Spacerebene an ihren oberen Enden Aussparungen auf, während Halteelemente der darüber angeordneten Spacerebene Aussparungen an ihren unteren Enden aufweisen. In einem solchen Fall können Schalldämmplatten leicht mit ihrem unteren und ihrem oberen Rand in Halteelementen zweier benachbarter Spacerebenen montiert werden. Die mit einer Schalldämmplatte zusammenwirkenden Halteelemente sind dabei vorzugsweise denselben Rohrreihen des Rohrbündels zugeordnet.

Nachfolgend wird die Erfindung anhand einer lediglich Ausführungsbeispiele darstellenden Zeichnung näher erläutert. In der Zeichnung zeigen
- Fig. 1: eine schematische Darstellung eines ein Rohrbündel aufweisenden Wärmeaustauschers,
- Fig. 2: eine Spacerebene des Rohrbündels aus Fig. 1 in einer Schnittansicht entlang der Ebene II-II aus Fig. 1,
- Fig. 3: ein Halteelement der Spacerebene aus Fig. 2,
- Fig. 4: ein weiteres Halteelement der Spacerebene aus Fig. 2,
- Fig. 5a, 5b: ein drittes Ausführungsbeispiel des Halteelements,
- Fig. 6: ein viertes Ausführungsbeispiel des Halteelements,
- Fig. 7: eine aus mehreren Halteelementen gemäß Fig. 6 zusammengesetzte Halteeinrichtung,
- Fig. 8: eine alternative Halteeinrichtung und
- Fig. 9: ein fünftes Ausführungsbeispiel des Halteelements.

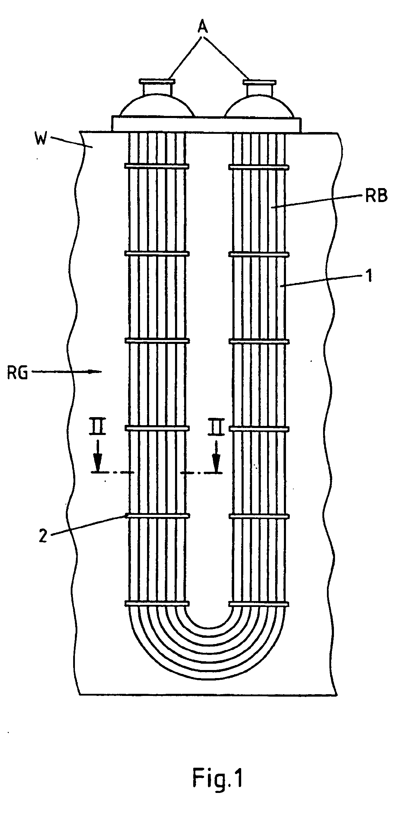

In der Fig. 1 ist ein Wärmeaustauscher W zum Aufheizen oder Kühlen von Rauchgasen RG dargestellt. Der Wärmeaustauscher W weist ein Rohrbündel RB aus einer Vielzahl von separaten Rohren 1 auf. Die Rohre 1 sind U-förmig ausgebildet und von oben in den Wärmeaustauscher W eingehangen, so dass das durch die Rohre 1 strömende Wärmeträgerfluid durch Anschlüsse A an der Oberseite des Wärmeaustauschers W zu- und wieder abgeführt wird.

Die Rohre 1 des Rohrbündels RB sind über weite Strecken desselben parallel zueinander ausgerichtet. Die Anströmrichtung des Rauchgases RG steht senkrecht zur Längserstreckung des Rohrbündels RB. Die Rohre 1 des Rohrbündels RB werden über mehrere Spacerebenen 2 gegeneinander positioniert.

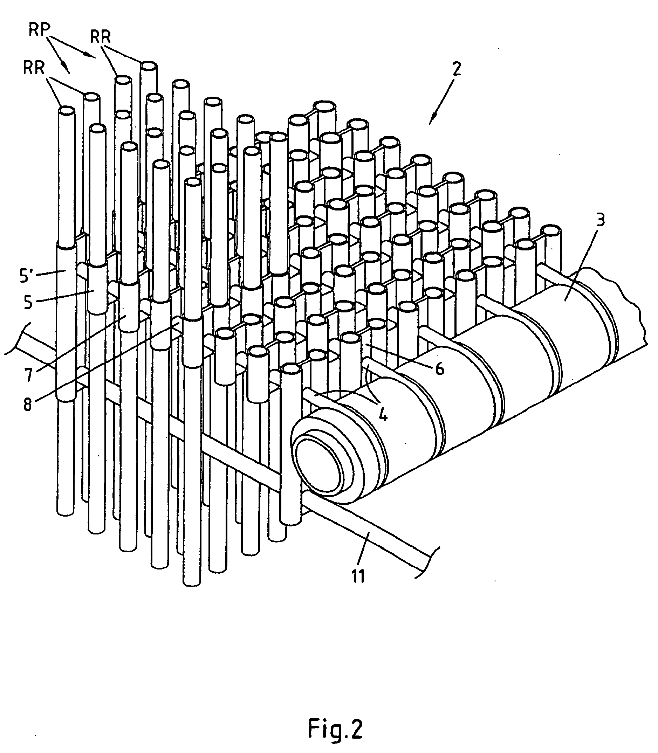

Der Aufbau einer Spacerebene 2 ist in Fig. 2 in einer Schnittansicht des Rohrbündels RB dargestellt. Die Spacerebene 2 verfügt über einen außerhalb des Rohrbündels RB angeordneten Rahmen 3, an dem stabförmige Stützen 4 angebracht sind. Die stabförmigen Stützen 4 erstrecken sich innerhalb der Spacerebene 2 im Zwischenraum zwischen zwei benachbarten Rohrreihen RR. Auf den Stützen 4 sind der Reihe nach mehrere Halteelemente 5,5' aufgefädelt.

Die Halteelemente 5,5' weisen ein von der Stütze 4 durchdrungenes Distanzierungselement 6,6' auf, welches zwei Führungselemente 7,7' gegeneinander beanstandet. Die Führungselemente 7,7' sind hülsenförmig ausgebildet und auf gegenüberliegenden Seiten der Stütze 4 angeordnet. In jedem Führungselement 7,7' ist ein Rohr 1 des Rohrbündels RB aufgenommen. Im dargestellten und insoweit bevorzugten Ausführungsbeispiel sind die Führungselemente 7,7' in Form von Rohrstücken ausgebildet.

Zwischen den auf einer Stütze 4 montierten Halteelementen 5,5' sind rohrförmige, auf die Stütze 4 aufgefädelte Abstandshalter 8 vorgesehen. Diese Abstandshalter 8 verhindern, dass ein Mindestabstand zwischen den Halteelementen 5,5' und damit den Rohren 1 einer Rohrreihe RR unterschritten wird, indem die Abstandshalter 8 an ihren beiden Enden in Anlage an die angrenzenden Halteelemente 5,5' gelangen.

Durch entsprechende alternierende Anordnung zwischen Halteelementen 5,5' und Abstandshaltern 8 über die gesamte Länge der jeweiligen Stützen 4 wird zudem sichergestellt, dass der Abstand zwischen den Rohren 1 einer Rohrreihe RR auch nicht zu groß werden kann. Im Ergebnis sind alle Rohre 1 des Rohrbündels RB in der Spacerebene 2 in vorgegebenen Abständen zueinander positioniert. Während der Abstand benachbarter Rohrreihen RR zueinander durch die Breite des Distanzierungselements 6,6' festgelegt ist, wird der Abstand zwischen den Rohren 1 einer Rohrreihe RR durch die Länge der Abstandshalter 8 und der Abstand zwischen zwei Rohrreihenpaaren RP durch den Abstand der Stützen 4 festgelegt.

Bei dem dargestellten und insoweit bevorzugten Ausführungsbeispiel ist der Innendurchmesser der Führungselemente 7,7' geringfügig größer als der Außendurchmesser der Rohre 1 des Rohrbündels RB. Auf diese Weise ist eine Längenänderung der Rohre 1 infolge der thermischen Ausdehnung derselben problemlos möglich, ohne dass der Rahmen 3 der Spacerebene 2 höhenvariabel im Wärmeaustauscher W montiert sein muss.

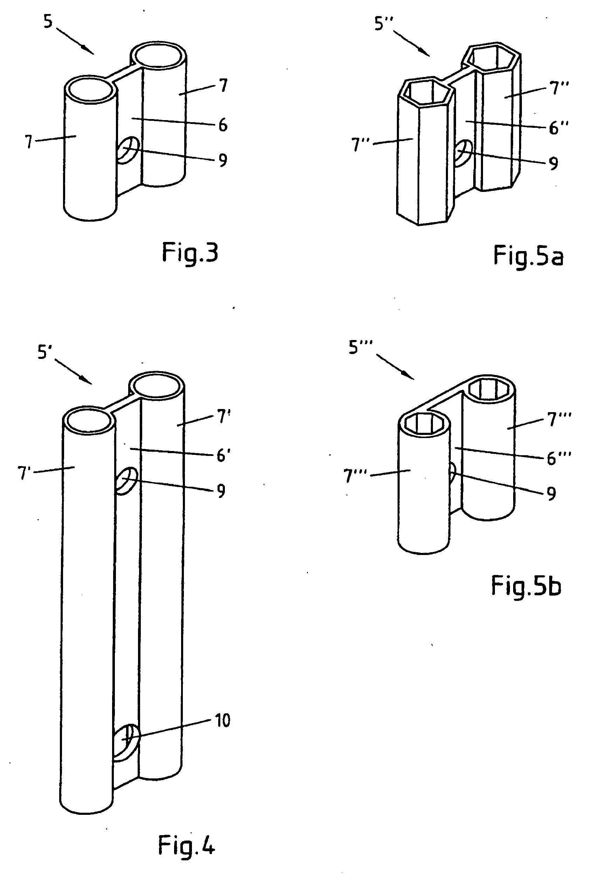

In der in der Fig. 2 dargestellten Spacerebene 2 sind zwei unterschiedliche Arten von Halteelementen 5,5' vorgesehen. Wie insbesondere in den Fig. 3 und 4 dargestellt ist, ist beiden Halteelementen 5,5' der Spacerebene 2 eine Öffnung 9 zur Durchführung der Stütze 4 in dem zwischen den Führungselementen 7,7' angeordneten Distanzierungselement 6,6' vorgesehen. Das Distanzierungselement 6,6' ist in der dargestellten und insoweit bevorzugten Ausführungsform als Steg im Bereich des geringsten Abstands zwischen den Führungselementen 7,7' ausgebildet. Die Führungselemente 7,7' sind hülsenförmig mit kreisrundem Querschnitt ausgebildet. Die Öffnung 9 zur Durchführung der Stütze 4 ist ebenso wie die Stütze 4 selbst mit einem kreisrunden Querschnitt versehen. Daher kann sich das Halteelement 5,5' ohne Probleme geringfügig um die Stütze 4 drehen.

Die Breite des Halteelements 5,5' ergibt sich aus dem Durchmesser der Führungselemente 7,7' und der Breite des stegförmig ausgebildeten Distanzierungselements 6,6'. Beim dargestellten und insoweit bevorzugten Ausführungsbeispiel ist die Höhe des Halteelements 5,5' um ein Vielfaches größer als der Durchmesser der Führungselemente 7,7'und die Öffnung 9 zur Durchführung der Stütze 4 außermittig zu einem Rand des Distanzierungselements 6,6' versetzt angeordnet.

Wie insbesondere in der Fig. 4 dargestellt ist, sind einzelne Halteelemente 5' der Spacerebene 2 länger ausgebildet als die Mehrheit der übrigen Halteelemente 5. Zudem weisen diese Halteelemente 5' neben einer Öffnung 9 zur Durchführung der Stütze 4 ebenfalls eine Öffnung 10 zur Durchführung eines Sprühschlauchs 11 auf. Die Öffnung 10 zur Durchführung des Sprühschlauchs 11 ist bei dem dargestellten und insoweit bevorzugten Ausführungsbeispiel im unteren Bereich der Spacerebene 2 vorgesehen. Es wäre aber grundsätzlich denkbar, die Durchführung 10 für den Sprühschlauch 11 im oberen Bereich der Spacerebene 2 anzuordnen, um auch auf der Spacerebene 2 befindliche Partikel abzureinigen.

Bei einer alternativen Ausgestaltung des erfindungsgemäßen Haltelements 5'', die in der Fig. 5a dargestellt ist, sind die Führungselemente 7'' hülsenförmig mit einem eckigen Querschnitt ausgebildet. Beim dargestellten und insoweit bevorzugten Ausführungsbeispiel ist der Querschnitt sechseckig ausgebildet.

Wie in der Fig. 5b dargestellt ist, kann das Distanzierungselement 6"' auch außermittig zwischen den beiden Führungselementen 7''' angeordnet sein. Auch das in der Fig. 5b dargestellte Distanzierungselement 6''' ist stegförmig ausgebildet. Ferner weisen die Führungselemente 7''' einen inneren eckigen und einen äußeren runden Querschnitt auf. Beim dargestellten und insoweit bevorzugten Ausführungsbeispiel ist der innere Querschnitt der Führungselemente 7''' achteckig ausgebildet.

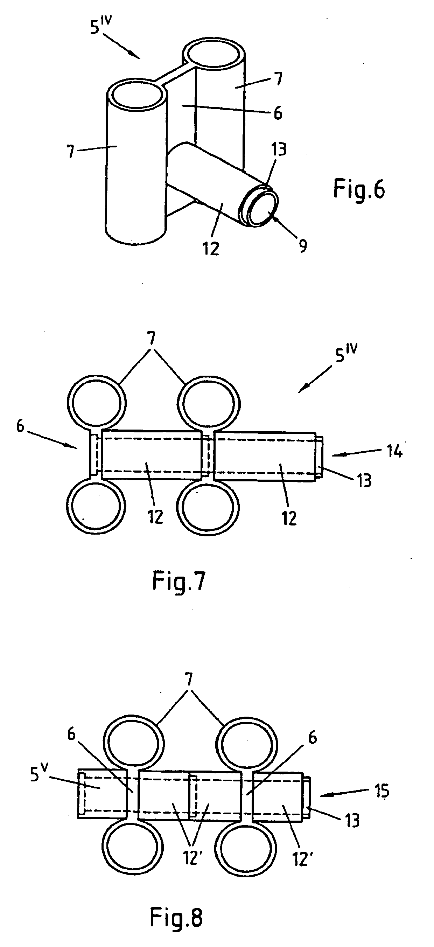

Das in der Fig. 6 dargestellte Halteelement 5^{IV} ähnelt von seinem prinzipiellen Aufbau dem in der Fig. 3 dargestellten Halteelement 5. Im Unterschied zu diesem Halteelement umfasst das in der Fig. 6 dargestellte Halteelement 5^{IV} jedoch noch wenigstens einen Abstandshalter 12, der als rohrförmige Hülse konzentrisch zur Öffnung 9 zur Durchführung der Stütze 4 der Spacerebene 2 ausgebildet ist.

Das Halteelement 5^{IV} ist einstückig zusammen mit dem wenigstens einen Abstandshalter 12 spritzgegossen. Der Abstandshalter 12 weist an seinem äußeren Ende einen Verbindungsabschnitt 13 auf. Im dargestellten und insoweit bevorzugten Ausführungsbeispiel ist der äußere Durchmesser im Verbindungsabschnitt 13 verjüngt, so dass der Verbindungsabschnitt 13 in das Distanzierungselement 6 eines angrenzenden Halteelements 5^{IV} eingesteckt und dort beispielsweise reibschlüssig und/oder formschlüssig gehalten werden kann.

Auf diese Weise kann aus einzelnen Halteelementen 5^{IV} eine Halteeinrichtung 14 hergestellt werden, wie sie in der Fig. 7 dargestellt ist. Die einzelnen Halteelemente 5^{IV} sind fluchtend zueinander angeordnet, wobei der Abstandshalter 12 des einen Haltelements 5^{IV} jeweils mit dem Distanzierungselement 6 des angrenzenden Halteelements 5^{IV} verbunden ist.

In der Fig. 8 ist eine alternative Ausgestaltung der Halteeinrichtung 15 dargestellt. Bei dieser weisen die Halteelemente 5^{V} auf beiden Seiten des Distanzierungselements 6 Abstandshalter 12' auf. Ein Abstandshalter 12' eines Halteelements 5^{V} ist dabei mit einem Abstandshalter 12' eines angrenzenden Halteelements 5^{V} zur Bildung einer Halteeinrichtung 15 verbunden.

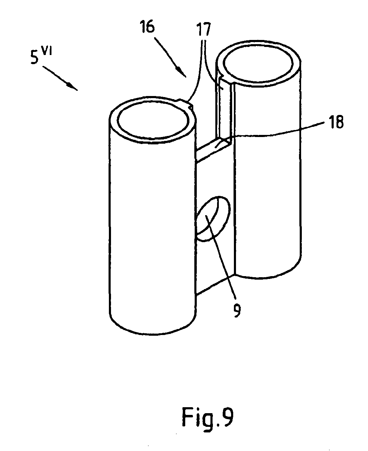

In der Fig. 9 ist ein Ausführungsbeispiel eines Halteelements 5^{VI} mit einer Aussparung 16 in Form einer Aufnahme etwa für das Einführen einer nicht dargestellten Schalldämmplatte eines Rohrbündels dargestellt. Die Aussparung 16 ist rechteckig in Form einer Nut ausgebildet, die in das Distanzierungselement eingelassen ist. Beim dargestellten und insoweit bevorzugten Halteelement 5^{VI} bildet das Distanzierungselement sowohl die beidseitigen Nutflanken 17 als auch den Nutgrund 18. Die Öffnung 9 zur Durchführung einer Stütze ist wegen der Aussparung 16 außermittig zum Halteelement 5^{VI} angeordnet. Das dargestellte Halteelement 5^{VI} weist keinen Abstandshalter auf. Es könnte alternativ aber auch wenigstens ein Abstandshalter der zuvor beschriebenen Art vorgesehen sein.

## Patentansprüche

1. Wärmetauscher (W) umfassend ein Rohrbündel (RB) mit wenigstens einer Spacerebene (2),
- wobei in der wenigstens einen Spacerebene eine Mehrzahl von Rohrreihen (RR) und mehreren stabförmigen Stützen (4) vorgesehen sind,
- wobei jede stabförmige Stütze (4) mehrere Halteelemente (5) trägt
- wobei jedes Halteelement (5) ein Distanzierungselement (6) mit einer Öffnung (9) zur Durchführung einer stabförmigen Stütze (4) durch das jeweilige Haltelement (5) aufweist,
- wobei jedes Halteelement (5) zwei rohrförmige Führungselemente (7) aufweist,
- wobei das Distanzierungselement (6) jedes Halteelements (5) zwischen den rohrförmigen Führungselementen (7)
- wobei in jedem rohrförmigen Führungselement (7) ein Rohr (1) auf einander gegenüberliegenden Seiten der Stütze (4) gehalten ist
**dadurch gekennzeichnet, dass**
- jedes Halteelement (5) einstückig aus Kunststoff spritzgegossen oder extrudiert ist. angeordnet ist und

2. Wärmetauscher nach Anspruch 1,
**dadurch gekennzeichnet, dass** jeweils zwei Rohrreihen (RR) des Rohrbündels (RB) von einer Stütze (4) gehalten werden.

3. Wärmetauscher nach Anspruch 1 oder 2,
**dadurch gekennzeichnet, dass** wenigstens einzelne Distanzierungselemente (6) jeweils eine Öffnung (10) zur Durchführung eines Sprühschlauchs (11) aufweisen.

4. Wärmetauscher nach einem der Ansprüche 1 bis 3,
**dadurch gekennzeichnet, dass** jeweils zwei benachbarte Halteelemente (5) über wenigstens einen, vorzugsweise nicht mit einem der Halteelemente verbundenen, Abstandshalter (12) voneinander beabstandet sind.

5. Wärmetauscher nach Anspruch 4,
**dadurch gekennzeichnet, dass** der Abstandshalter (12) hülsenförmig ausgebildet und um die Öffnung (9) zur Durchführung der Stütze (4) herum angeordnet ist.

6. Wärmetauscher nach einem der Ansprüche 1 bis 5,
**dadurch gekennzeichnet, dass** eine Mehrzahl von Halteelementen (5) miteinander in Längsrichtung der Stütze (4) zu einer Halteeinrichtung (14,15) verbunden sind.

7. Wärmetauscher nach Anspruch 6,
**dadurch gekennzeichnet, dass** die Verbindung formschlüssig, kraftschlüssig und/oder reibschlüssig ausgebildet ist.

8. Wärmetauscher nach Anspruch 6 oder 7,
**dadurch gekennzeichnet, dass** jeweils ein Abstandshalter (12) und ein Distanzierungselement (6) miteinander verbunden sind.

9. Wärmetauscher nach einem der Ansprüche 1 oder 8,
**dadurch gekennzeichnet, dass** wenigstens bestimmte Halteelemente (5) eine Aussparung (16) in Form einer Aufnahme aufweisen.

## Claims

1. Heat exchanger (W) comprising a tube bundle (RB) with at least one spacer plane (2),
- wherein a plurality of tube rows (RR) and several rod-like supports (4) are included in at least one spacer plane,
- wherein each rod-like support (4) bears several retention elements (5)
- wherein each retention element (5) features a spacing element (6) with an opening (9) so that a rod-like support (4) may go through the respective retention element (5),
- wherein each retention element (5) features two tubular guiding elements (7),
- wherein the spacing element (6) of each retention element (5) is positioned between the tubular guiding elements (7) and
- wherein in each tubular guiding element (7) a tube (1) is retained at each opposing side of the support (4),
**characterised in that**
- each retention element (5) is one piece that is injection moulded or extruded from plastic.

2. Heat exchanger according to claim 1,
**characterised in that**
two tube rows (RR) of the tube bundle (RB) are retained by a support (4).

3. Heat exchanger according to claims 1 or 2,
**characterised in that**
at least one of the spacing elements (6) feature an opening (10) to provide for a spray hose (11).

4. Heat exchanger according to any one of claims 1 to 3,
**characterised in that**
two adjacent retention elements (5) are spaced apart from each other by at least one spacer (12) that is not preferably connected with one of the retention elements.

5. Heat exchanger according to claim 4,
**characterised in that**
the spacer (12) has a sleeve-like design and the opening (9) is positioned to provide for the support (4).

6. Heat exchanger according to any one of claims 1 to 5,
**characterised in that**
a plurality of retention elements (5) are interconnected to a retention device (14, 15) in longitudinal direction of the support (4).

7. Heat exchanger according to claim 6,
**characterised in that**
the connection is positive-locking, non-positive-locking and/or frictional.

8. Heat exchanger according to claim 6 or 7,
**characterised in that**
a spacer (12) and a spacing element (6) are each connected together.

9. Heat exchanger according to one of claims 1 or 8,
**characterised in that**
at least the specified retention elements (5) feature a recess (16) in the form of a receiving member.

## Revendications

1. Échangeur de chaleur (W) comportant un faisceau de tubes (RB) avec au moins un plan d'écartement (2),
- auquel cas l'on prévoit, dans au moins un plan d'écartement, une multitude de rangées de tubes (RR) et plusieurs supports (4) en forme de barre,
- auquel cas chaque support (4) en forme de barre porte plusieurs éléments de retenue (5),
- auquel cas chaque élément de retenue (5) présente un élément de maintien à distance (6) avec une ouverture (9) pour le passage d'un support (4) en forme de barre à travers l'élément de retenue (5) respectif,
- auquel cas chaque élément de retenue (5) présente deux éléments de guidage (7) tubulaires,
- auquel cas l'élément de maintien à distance (6) de chaque élément de retenue (5) est agencé entre les éléments de guidage (7) tubulaires, et
- auquel cas un tube (1) est maintenu sur des côtés mutuellement opposés du support (4) dans chaque élément de guidage (7) tubulaire,
**caractérisé en ce que**
- chaque élément de retenue (5) est moulé par injection et/ou extrudé d'une seule pièce en matière synthétique.

2. Échangeur de chaleur selon la revendication 1,
**caractérisé en ce que** respectivement deux rangées de tubes (RR) du faisceau de tubes (RB) sont maintenues par un support (4).

3. Échangeur de chaleur selon la revendication 1 ou 2,
**caractérisé en ce qu'**au moins certains éléments de maintien à distance (6) présentent respectivement une ouverture (10) pour le passage d'un flexible d'injection (11).

4. Échangeur de chaleur selon une des revendications de 1 à 3,
**caractérisé en ce que** respectivement deux éléments de retenue (5) adjacents sont mutuellement espacés à l'aide d'un espaceur (12) n'étant pas, de préférence, relié à un des éléments de retenue (5).

5. Échangeur de chaleur selon la revendication 4,
**caractérisé en ce que** l'espaceur (12) est conçu en forme de manchon et est agencé autour de l'ouverture (9) pour le passage du support (4).

6. Échangeur de chaleur selon une des revendications de 1 à 5,
**caractérisé en ce que** plusieurs éléments de retenue (5) sont reliés ensemble en un dispositif de retenue (14, 15) en direction longitudinale du support (4).

7. Échangeur de chaleur selon la revendication 6,
**caractérisé en ce que** l'assemblage est conçu par liaison mécanique, par liaison par force et/ou par liaison par friction.

8. Échangeur de chaleur selon la revendication 6 ou 7,
**caractérisé en ce que** respectivement un espaceur (12) et un élément de maintien à distance (6) sont mutuellement reliés.

9. Échangeur de chaleur selon une des revendications de 1 à 8,
**caractérisé en ce qu'**au moins certains éléments de retenue (5) présentent un évidement (16) en forme de logement.
